# EUROPEAN PATENT APPLICATION

(11) **EP 0 992 827 A1**
(43) Date of publication of application: **12.04.2000**
(21) Application number: 99402217.6
(22) Date of filing: 09.09.1999
(51) Int. Cl.: G02B 6/44

(54) **Seawater resistant communications cable having waterblocking material disposed in core**

(30) Priority: 30.09.1998 US 163508
(71) Applicant: ALCATEL, 75008 Paris (FR)
(72) Inventor: Risch, Brian G., Hickory, NC 28601 (US); Holder, James D., Hickory, North Carolina 28602 (US)
(74) Representative: Feray, Valérie

(57) **Abstract**

A communications cable capable of passing a one meter L-type penetration test with seawater is disclosed. The cable comprises at least one buffer tube fabricated from a hydrolytically stable polyolefin material. The cable also includes at least one communications element disposed in the buffer tube and a protective jacket disposed over the buffer tube. To reliably prevent seawater penetration, a substrate with a side loosely containing a releasable superabsorbent material having a seawater to deionized water swellability ratio above about 0.3 is disposed between the buffer tube and the outer jacket so that the side containing the releasable superabsorbent faces the buffer tube. When seawater comes into contact with the superabsorbent material of the substrate in the cable of the present invention, the superabsorbent material is swept from the substrate's side as well as swelled. The swelled superabsorbent accumulates in the space between the outer jacket and buffer tube to form a water blocking data-like structure between the outer jacket and the buffer tube thereby preventing seawater from flowing through the cable between the buffer tube and the protective jacket.

## Description

### BACKGROUND OF THE INVENTION

### Field of the Invention

The present invention relates to telecommunications cables. More particularly, the present invention relates to a telecommunication cable having a core containing superabsorbent water blocking material arranged to enable a mechanical dam to form to block seawater from passing through the cable.

### Description of the Prior Art

Optical fiber cables have used by the telecommunications industry for a number of years to transmit information at very high rates over long distances. Such cables are exposed to a variety of environmental conditions. For example, cables located underground in storm sewage causeways may be exposed to water and seawater containing ionic species. If the protective jacket surrounding the cable is damaged, water or seawater can enter the cable. Water inside a cable is undesirable for many reasons. Optical fibers exposed to water typically experience increases in attenuation, sometimes to levels that are unacceptable. Water can attack the surface of the glass optical fibers and increase the likelihood of premature mechanical failure. Also, water inside the cable core can travel into splice enclosure boxes, which is undesirable because the fibers therein are relatively exposed. However, through the use of water blocking materials, water migration and water exposure inside the cable can be limited somewhat.

There are a variety of ways to control water movement and exposure inside a cable. Some optical fiber cables of the loose tube variety use filling compounds inside the buffer tube and a flooding compound between the buffer tubes and the jacket surrounding the buffer tubes. The filling and flooding compounds shield the optical fibers from water which may enter the cable if the jacket and/or the buffer tubes are breached. Flooding compounds are typically viscous gels that are intended to impede the flow of water in the cable. Filling and flooding compounds have several drawbacks including giving a wet or greasy feel to the optical fibers, buffer tubes and inside part of the jacket, which is undesirable when access to fibers is required. Such compounds also add to the weight of the cable and the filling and flooding compounds ability to provide an effective barrier to water for the optical fibers and buffer tubes is questionable.

To avoid or reduce the use of filling and flooding compounds, some cables provide a "dry" water blocking material such as a superabsorbent. For example, U.S. Patent No. 4,867,526 describes an optical fiber cable which incorporates a non-woven tape which is impregnated with a superabsorbent material. U.S. Patent No. 5,422,973 describes an optical fiber cable which incorporates either superabsorbent containing yarns or tapes. U.S. Patent No. 5,642,452 describes a water-tight optical fiber cable constructed without viscous water-blocking compounds other than in the buffer tubes. The water blocking is obtained by the use of water swellable yarns and tape. U.S. Patent No. 5,684,904 describes an optical fiber cable which includes optical fibers loosely housed within a buffer tube that further includes an inner coating, an outer coating of moisture-absorptive materials.

The ability of an optical fiber cable to resist penetration has been measured with a simple industry standard test referred to as the 1M L-type test (FOTP-82). In this test, the end of a cable 1 meter in length is connected to one end of a conduit. The other end of the conduit is connected to a source of water having a 1 meter static head of pressure. A valve is opened and the water is permitted to enter the end of the cable for a period of 24 hours. At the end of the test, the length of axial penetration of the water is measured. Cables that do not allow water to pass through the entire 1 meter length pass the test while cables that permit full penetration of the 1 meter length do not pass. The aforementioned patents do not disclose performance characteristics of the cables in a 1 M L-type test. Furthermore, no mention of resistance to seawater penetration is made for these cables.

In an article by J. Davis and R. Demaree entitled "Performance of Swellable Materials in High Ionic Seawater Environments," NFOEC 1996, pages 211 to 219, the authors report water penetration test results for an optical fiber cable containing superabsorbent polymers. The best water penetration result for the cable design discussed in the paper was approximately 1.5M in a 3 M L-type test. While the penetration results described in the paper are respectable, the results would still fail the 1 M L-type test.

As described above, waterblocking gels may work to block seawater penetration but they are generally undesirable because they are messy. The prior art cable designs containing superabsorbents have not been able to consistently pass the 1 M L-type test with a seawater solution. Thus, the reliability of cables containing dry water blocking technology based on superabsorbent materials presents a major technical problem. Two major reliability issues that exist for current cables is the inability to resist seawater penetration and once seawater has penetrated, the ability to resist buffer tube degradation caused by exposure to the moisture entrained in the cable. Generally, the problem that seawater causes results from the ions it contains. The ions severely hinder the swelling reaction of the superabsorbents. It is the swelling reaction that blocks or prevents water from deeply penetrating a cable. However, even while the superabsorbents trap water, this water causes moisture to remain in the cable and in contact with the buffer tubes therein. As there is an industry trend to use dry cores, that is cores without flooding and filling compounds, the elimination of such compounds removes an important protective moisture barrier for buffer tubes. PBT buffer tubes, when exposed to seawater for extended periods of time can undergo hydrolytic decomposition, which causes such tubes to become weakened, brittle and unable to satisfactorily perform mechanically to protect the fibers contained therein. Thus, the risk of cable failure in environments where seawater penetration is a factor can be high. Therefore, in cases where no or minimal amounts of water blocking filling or flooding compounds are used, it is important to both minimize water migration into the cable as well as provide a buffer tube having good hydrolytic and thermo-oxidative stability.

### SUMMARY OF THE INVENTION

It is an object of the present invention to provide an optical fiber cable that can pass the 1 M L-type test with seawater without using flooding gel outside of the buffer tubes.

This object is accomplished, at least in part, by a communications cable capable of passing a one meter L-type penetration test with seawater. The cable of the present invention comprises at least one buffer tube fabricated from a hydrolytically stable polyolefin material; at least one communications element disposed in the buffer tube; a protective jacket disposed over the buffer tube; and a substrate with a side loosely containing a releasable superabsorbent material having a seawater to deionized water swellability ratio above about 0.3, the substrate being disposed between the buffer tube and the outer jacket so that the side containing the releasable superabsorbent faces the buffer tube. When seawater comes into contact with the superabsorbent material of the substrate in the cable of the present invention, at least a portion of the superabsorbent material is swept from the substrate's side as well as swelled. The loose, swelled superabsorbent accumulates in the space between the outer jacket and buffer tube to form a water blocking dam-like structure between the outer jacket and the buffer tube thereby preventing seawater from flowing through the cable between the buffer tube and the protective jacket.

Other objects and advantages of the present invention will become apparent to those skilled in the art from the following detailed description read in conjunction with the attached drawing and claims appended hereto.

### BRIEF DESCRIPTION OF THE DRAWINGS

The drawings, not drawn to scale, include:
FIG. 1, which is a cross-sectional view of a first cable embodiment made according to the present invention; and
FIG. 2, which is a cross-sectional view of a second cable embodiment made according to the present invention.

### DETAILED DESCRIPTION OF THE PRESENT INVENTION

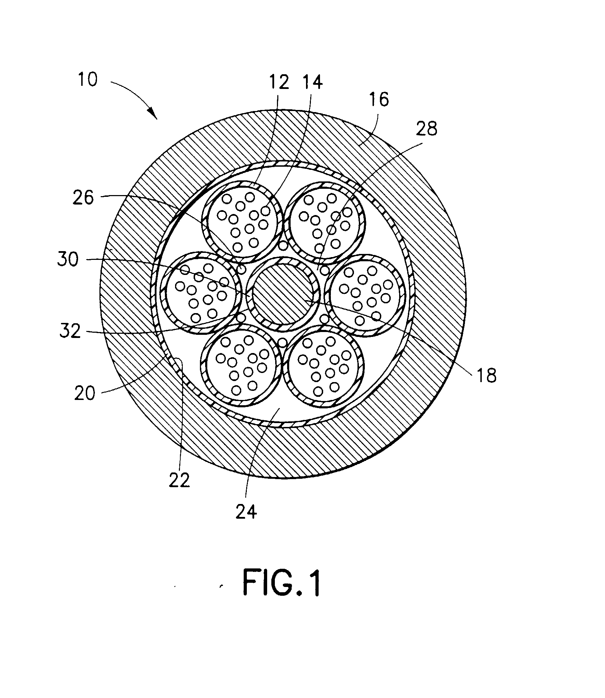

Referring to FIG. 1, a communications cable 10 capable of passing a one meter L-type penetration test with seawater, having a composition as specified in ASTM D1141, is formed by providing one or more buffer tubes **12** fabricated from a hydrolytically stable polyolefin material. One or more communications elements **14**, such as optical fibers, are disposed in the buffer tube(s). The communications element may be loosely disposed so as to form a loose tube configuration. An outer jacket **16** is disposed over the buffer tubes **12**. The buffer tubes **12** may be stranded in an S-Z configuration, if desired, about a central strength member **18**. Those skilled in the art will recognize that FIG. 1 represents a typical cross-section of an S-Z stranded optical fiber cable. Those persons will also recognize that the principles of the invention can be employed with virtually any type of cable and that the S-Z stranded configuration is merely illustrative.

To render the cable illustrated in FIG. 1 capable of blocking seawater sufficiently to pass the 1 M L-type test, a substrate, such as a tape or yarn, **20** loosely containing a releasable superabsorbent material is disposed between the buffer tubes **12** and the outer jacket **16** so as to enable at least a portion of the releasable superabsorbent contained by the substrate to be released from the substrate when contacted by water. The released superabsorbent forms a water blocking dam-like structure between the outer jacket **16** and the buffer tubes **12**. In order to satisfactorily perform in a seawater environment containing ions, the releasable superabsorbent contained on the substrate must have a seawater to deionized water swellability ratio above about 0.3. Preferably, the ratio is above about 0.5. Superabsorbents that meet the above criteria include: polyacrylates with carboxylate functional groups, partially neutralized polyacrylic acid, polyamides, or copolymers of the above; e.g., a copolymer of acrylic acid and sodium acrylite.

The seawater to deionized water swellability ratio is a comparison of the swelling height of a material in the presence of seawater to the swelling height of the same material in the presence of deionized water. A ratio of about 0.3 means that the swelling height of the material in the presence of seawater is about 30 percent of the swelling height that occurs in the presence of deionized water. The superabsorbent in a standard superabsorbent tape based on sodium acrylate chemistry has a seawater swellabilty ratio of less than about 0.05, which is not satisfactory in the present invention. The commercially available tape described in the article by Davis and Demaree, referenced above, has a swellability ratio slightly higher than about 0.1. Besides having a low swellability ratio, this tape cannot form a mechanical dam type barrier according to the present invention because the superabsorbent material in powder form is laminated between two polyester tapes and therefore its swelling is constrained by the polyester tapes. Even when a sandwich type tape is used having a high swell height many times greater than that of seawater tape, the design still fails the 1 M L-type seawater penetration test.

Accordingly, in the present invention, to overcome the problems encountered with sandwich type tapes or substrates, the superabsorbent material is releasably or loosely contained on at least one side of the substrate **20**, such as a polyester tape. The term loosely or releasably means that at least some or all of the superabsorbent material may be easily swept from the substrate by the flowing water. The substrate **20** is disposed within the cable so that the superabsorbent material containing side **22** of the substrate **20** faces towards the buffer tubes **12** and the gaps or spaces **24** therebetween wherein water may flow. The superabsorbent material has a mean particle size below about 10 µm. Additionally, two or more types of superabsorbent particles may be combined to optimize swelling performance. If two different types of particles are used, the particles can vary from each other on the basis of different size, shape or chemical composition. Water blocking seawater yarns or tape **26** may be disposed in the gaps or spaces **28** formed between adjacent buffer tubes **12** and the central strength member **20**.

According to the present invention, if the jacket **16** is breached and seawater enters the cable **10**, at least a portion of the superabsorbent material of the substrate **20** is swept from the substrate **20** upon contact with the water, swells upon contact with the water and the swollen superabsorbent accumulates in the gaps or spaces **28** between the buffer tubes **12** and the jacket **16**. Because the superabsorbent material swells and accumulates, a mechanical barrier or dam forms in the gaps or spaces **26** between the jacket **16** and the buffer tubes **12** to slow or prevent the further ingress of seawater. As stated above, a good mechanical dam cannot be obtained with a sandwich type tape, as described above, because the superabsorbent material cannot be accumulated in such spaces.

Still referring to FIG. 1, the cable may be further provided with a seawater blocking substrate **30** surrounding the central strength member. If such a substrate is provided, the yarns **26** may be eliminated, if desired. The seawater blocking substrate **30** has the superabsorbent material loosely applied on its surface **32** facing the buffer tubes **12**. The superabsorbent material on the substrate **20** and the superabsorbent material on the substrate **30** applied to the central strength member **18** may be flushed from the respective substrates when seawater infiltrates the cable **10**. Swelled, accumulated superabsorbent material forms mechanical dams in the gaps or spaces **28** between the central strength member and the buffer tubes **12** and in the gaps or spaces **24** between the buffer tubes and the jacket **16**.

One important advantage of this invention is a reduction in substrate **20** thickness over cables containing a sandwich type water blocking tape. When the substrate **20** in the present invention is constructed of a single nonwoven layer tape, its thickness is about only 0.19 mm, which represents about 55 percent of the thickness of the typical sandwich type tape's 0.425 mm thickness. Due to the decrease in thickness, more than twice as much of the single layer seawater tape can be placed in a given cable, for example. A thinner tape also permits the manufacture of a smaller overall cable diameter. A reduction in material cost is also achieved.

Although the seawater blocking substrate **20** prevents substantial ingress of seawater in the cable as described above, the water or moisture that has entered the core of a cable can remain in contact with the buffer tubes **12**. For good seawater reliability, the buffer tubes should be made from a polyolefin material rather than from the traditional materials used for buffer tubes, such as polybutylene terepthalate (PBT) and bisphenol-A polycarbonate (PC). While both of these materials show relatively good thermo-oxidative stability at temperatures below about 300 °C, both materials are extremely sensitive to hydrolysis due to the ester groups within the polymer backbone. Careful drying of these materials is required to prevent severe degradation of the material during processing. PBT, in particular, can suffer from hydrolytic degradation at temperatures below 100 °C in the presence of minimal quantities of water. The hydrolytically stable polyolefin materials, suitable for use in the present invention includes impact copolymers of polypropylene (i-PP), as described in U.S. Patent No. 5,574,876. The improvements in hydrolytic stability of the i-PP material over PBT is due to the fact that there are no groups in the polypropylene backbone that are subject to hydrolytic attack. Also, water has a much lower solubility in i-PP than in polyesters and polycarbonates. A buffer tube made from nucleated i-PP material as described in the above-referenced U.S. patent was subjected to an aging test at 85° C and 85 percent relative humidity for over 20 weeks. The tube retained an elongation to break of over 400 percent. After 45 days under the same test conditions, PBT buffer tubes exhibited brittle failure (i.e., elongation less than 4%) caused by the hydrolytic attack of the ester groups. Thus, the improved hydrolytic stability of the polyolefin material such as i-PP leads to improved reliability of the buffer tubes in environments where temperature and humidity conditions are not easily controlled.

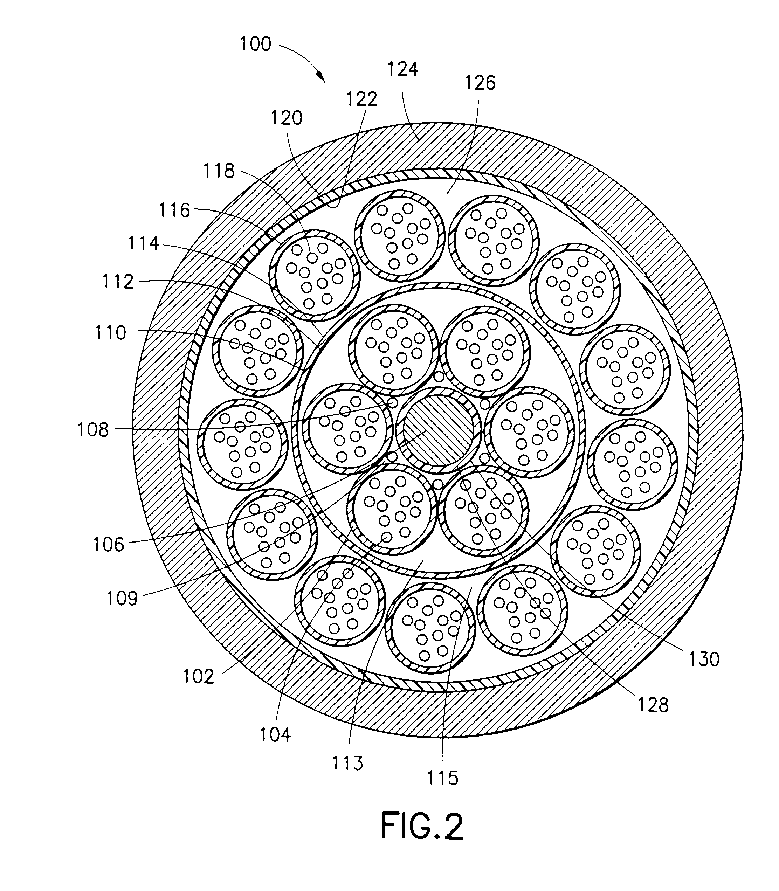

FIG. 2 illustrates a high fiber count multilayer communications cable **100** made according to the present invention. The cable **100** comprises a first layer of buffer tubes **102** fabricated from the hydrolytically stable polyolefin material. Communications elements **104**, such as optical fibers, are disposed in the buffer tubes **102**. The communications elements **104** may be loosely disposed within the buffer so as to form a loose tube configuration. The buffer tubes **102** may be stranded in an S-Z configuration, if desired, about a central strength member **106**. Seawater blocking substrates, such as tape or yarn **108**, may be disposed in the gaps or spaces **109** between adjacent buffer tubes **102** in the first layer and the central strength member **106.** A seawater blocking substrate **110** containing a releasable superabsorbent on both interior and exterior facing sides **112, 114** surrounds the first layer of buffer tubes **102**. Alternatively, those skilled in the art will appreciate that two substrates, such as tapes, having only one side loosely containing the superabsorbent, as described above, may be used. If two substrates are used, the sides without the superabsorbent material are placed adjacent to each other. With the substrate **110**, the releasable superabsorbent on the interior side **112** faces the gaps or spaces **113** between the adjacent buffer tubes **102** in the first layer and the releasable superabsorbent on the exterior side **114** faces interior gaps or spaces **115** between adjacent buffer tubes in a second layer of buffer tubes **116** containing communications elements **118**, such as optical fibers surrounding the substrate **110**. A seawater blocking substrate **120**, having a side **122** containing a releasable superabsorbent, is provided around the second layer of buffer tubes **116**. The side **122** containing the releasable superabsorbent is oriented to face the buffer tubes **116** so as to provide a superabsorbent material that can fill the gaps or spaces **126** between the adjacent buffer tubes. A protective jacket **124** surrounds the substrate **120** and material surrounded thereby. The cable **100** may be further provided with a seawater blocking substrate **128**, such as tape or yarn, surrounding the central strength member **106**. If such a substrate is provided, the yarns **108** may be eliminated, if desired. The seawater blocking substrate **128** also has the superabsorbent material loosely applied on its surface **130** facing the first layer of buffer tubes **102** and the gaps **109** therebetween.

According to the present invention, the superabsorbent material on the sides of substrates **20, 120 & 128** may be flushed from the substrates when seawater infiltrates the cable **100**. Swelled, accumulated superabsorbent material forms mechanical dams in the gaps or spaces **109, 113, 115, 126** to prevent the flow of water down the interior of the cable **100**.

Those skilled in the art will appreciate that multilayer cables with more than two layers of buffer tubes can be formed wherein a seawater blocking substrate is provided between each layer of buffer tubes, wherein the substrate contains a releasable superabsorbent facing the gaps or spaces between buffer tubes of each layer. In all cables made according to the present invention, the superabsorbent material should have a seawater swellability ratio, as defined above, above about 0.3 and preferably above about 0.5.

It will thus be seen that the objects and advantages set forth above and those made apparent from the preceding descriptions, are efficiently attained and, since certain changes may be made in the above construction without departing from the scope of the invention, it is intended that the matter contained in the above description or shown in the accompanying drawings shall be interpreted as illustrative and not in a limiting sense. It is also to be understood that the following claims are intended to cover all of the generic and specific features of the invention herein described, and all statements of the scope of the invention which, as a matter of language, might be said to fall therebetween.

## Claims

1. A communications cable **(10)** capable of passing a one meter L-type penetration test with seawater, the cable comprising:
at least one buffer tube **(12)** fabricated from a hydrolytically stable polyolefin material; at least one communications element **(14)** disposed in the buffer tube;
a protective jacket **(16)** disposed over the buffer tube **(12)**;
a substrate **(20)** with a side **(22)** loosely containing a releasable superabsorbent material
having a seawater to deionized water swellability ratio above about 0.3, the substrate being disposed between the buffer tube and the outer jacket so that the side **(22)** containing the releasable superabsorbent faces the buffer tube **(12)**;
whereby when seawater comes into contact with the superabsorbent material, at least a portion of the superabsorbent material contained by the substrate is swept from the substrate side and is swelled, the swelled superabsorbent accumulating in the space between the outer jacket and buffer tube to form a water blocking dam-like structure between the outer jacket and the buffer tube thereby further preventing seawater from flowing through the cable between the buffer tube and the protective jacket.

2. The cable defined in claim 1, wherein the superabsorbent material has a seawater to deionized water swellability ratio above about 0.5.

3. The cable defined in claim 1, wherein a water blocking material is disposed within the buffer tube.

4. The cable defined in claim 1, wherein the communications element **(12)** is an optical fiber.

5. The cable defined in claim 1, wherein the cable **(10)** further includes a central strength member **(18)**, and wherein a substrate **(30)** with a side **(32)** loosely containing a releasable superabsorbent material having a seawater to deionized water swellability ratio above about 0.3 is disposed about the central strength member **(18)** and is further disposed about the central strength member **(18)** so that the superabsorbent containing side **(32)** faces the buffer tube **(12)**.

6. The cable of claim 1, wherein the substrate is a tape.

7. The cable of claim 1, wherein the substrate is a yarn.

8. A stranded communications cable capable of passing a one meter L-type penetration test with seawater, the stranded cable comprising:
a central strength member **(18)**;
a plurality of buffer tubes **(12)** made from a hydrolytically stable olefin material stranded about the central strength member;
at least one communications element **(14)** disposed within each of the buffer tubes **(12)**;
a protective jacket **(16)** surrounding the plurality of buffer tubes **(12)**;
a substrate **(20)** with a side **(22)** loosely containing a releasable superabsorbent material having a seawater to deionized water swellability ratio above about 0.3, the substrate **(20)** being disposed between the plurality of buffer tubes **(12)** and the protective jacket **(16)** so that the side **(22)** containing the releasable superabsorbent faces the buffer tubes **(12)**;
whereby when seawater comes into contact with the superabsorbent material, at least a portion of the superabsorbent material is swept from the substrate's side and is swelled, the swelled superabsorbent accumulating in the space between the outer jacket and buffer tube to form a water blocking dam-like structure between the outer jacket and the buffer tubes thereby further preventing seawater from flowing through the cable between the buffer tube and the protective jacket.

9. The cable of claim 8, wherein a seawater swellable material is disposed in the spaces between adjacent buffer tubes of the plurality and the central strength member.

10. The cable of claim 9, wherein the seawater swellable material is a seawater swellable yarn.

11. The cable of claim 9, wherein the seawater swellable material is a seawater swellable tape.

12. The cable defined in claim 8, wherein the superabsorbent material has a seawater to deionized water swellability ratio above about 0.5.

13. The cable defined in claim 8, wherein a water blocking is disposed within each of the buffer tubes **(12)** of the plurality.

14. The cable defined in claim 8, wherein the communications elements **(14)** are optical fibers.

15. The cable defined in claim 8, wherein a substrate **(30)** with a side **(32)** loosely containing a releasable superabsorbent material having a seawater to deionized water swellability ratio above about 0.3 is disposed about the central strength member **(18)** and is further disposed so that the superabsorbent containing side **(32)** faces the buffer tubes **(12)**.

16. A multi-layer stranded communications cable **(100)** capable of passing a one meter L-type penetration test with seawater, the multi-layer stranded cable comprising:
a central strength member **(106)**;
a first layer of buffer tubes **(102)** made from a hydrolytically stable olefin material stranded about the central strength member **(106)**;
at least one communications element **(104)** disposed within each of the buffer tubes **(102)** of the first layer;
a second layer of buffer tubes **(116)** made from a hydrolytically stable olefin material stranded about the first layer of buffer tubes;
at least one communications element **(118)** disposed within each of the buffer tubes **(116)** of the second layer;
a first substrate **(110)** disposed between the first and second layers of buffer tubes, the first substrate **(110)** further having two sides **(112, 114)** loosely containing a releasable superabsorbent material having a seawater to deionized water swellability ratio above about 0.3
a protective jacket **(124)** surrounding the first and second layers of buffer tubes and first tape; and
a second substrate **(120)** with a side **(122)** loosely containing a releasable superabsorbent material having a seawater to deionized water swellability ratio above about 0.3, the substrate **(120)** being disposed between the second layer of buffer tubes and the protective jacket **(124)** so that the side containing the releasable superabsorbent faces the second layer of buffer tubes;
whereby when seawater comes into contact with the superabsorbent material contained by the second substrate, at least a portion of the superabsorbent material is swept from the substrate's side and is swelled, the swelled superabsorbent accumulating in the space between the outer jacket and second layer of buffer tubes to form a water blocking dam-like structure therebetween preventing a flow of seawater and whereby when seawater comes into contact with the superabsorbent material on both sides of the first substrate, at least a portion of the superabsorbent material is swept from the first substrate's sides and is swelled, the swelled superabsorbent accumulating in the space between the first tape and the second layer of buffer tubes and the space between the first tape and the first layer of buffer tubes, thereby further preventing seawater from flowing through the cable through such spaces.

17. The cable of claim 16, wherein a seawater swellable material is disposed in the spaces between adjacent buffer tubes of the first layer of buffer tubes and the central strength member.

18. The cable of claim 17, wherein the seawater swellable material is a seawater swellable yarn.

19. The cable of claim 17, wherein the seawater swellable material is a seawater swellable tape.

20. The cable defined in claim 16, wherein the superabsorbent material contained by all of the substrates has a seawater to deionized water swellability ratio above about 0.5.

21. The cable defined in claim 16, wherein a water blocking is disposed within each of the buffer tubes in the first and second layers.

22. The cable defined in claim 16, wherein the communications elements are optical fibers.

23. The cable defined in claim 16, wherein a substrate **(128)** with a side **(130)** loosely containing a releasable superabsorbent material having a seawater to deionized water swellability ratio above about 0.3 is disposed about the central strength member **(106)** and the substrate **(128)** is further disposed so that the superabsorbent containing side **(130)** faces the first layer of buffer tubes **(102)**.
